# EUROPÄISCHE PATENTANMELDUNG

(11) **EP 4 162 845 A1**
(43) Veröffentlichungstag der Anmeldung: **12.04.2023**
(21) Anmeldenummer: 22200639.7
(22) Anmeldetag: 10.10.2022
(51) Int. Cl.: A47J 31/16, A47J 31/44, A47J 31/00

(54) **VORRICHTUNG ZUR ZUBEREITUNG EINES GETRÄNKES**

(30) Priorität: 11.10.2021 DE 102021126311
(71) Anmelder: Melitta Single Portions GmbH & Co. KG, 32425 Minden (DE)
(72) Erfinder: MERSCH, Pia, 58332 Schwelm (DE)
(74) Vertreter: Dantz, Jan Henning

(57) **Zusammenfassung**

Eine Vorrichtung zur Zubereitung eines Getränkes umfasst einen Behälter (1) mit einem Unterteil (2) zur Aufnahme von Wasser, eine Heizeinrichtung (7) zum Erhitzen des Wassers in dem Unterteil (2), und ein abnehmbares Oberteil (3) mit einer Aufnahme (11) zum Einfügen einer Kapsel (25) mit Extraktionsmaterial, wobei der Behälter (1) zum Brühen eines Getränkes auf dem in dieser Position unten angeordneten Oberteil (3) abstellbar ist, damit heißes Wasser in die Kapsel (25) strömt, wobei in dem Oberteil (3) benachbart zu der Aufnahme (11) ein rohrförmiger Kanal (14) zur Entnahme des Getränkes ausgebildet ist, der durch ein Verschlusselement (5) verschließbar ist. Dadurch kann nach der Zubereitung des Getränkes die Flüssigkeit aus dem Behälter (1) entnommen werden, ohne dass das Oberteil (3) demontiert werden muss.

## Beschreibung

Die vorliegende Erfindung betrifft eine Vorrichtung zur Zubereitung eines Getränkes, mit einem Behälter mit einem Unterteil zur Aufnahme von Wasser, einer Heizeinrichtung zum Erhitzen des Wassers in dem Unterteil, und einem abnehmbaren Oberteil mit einer Aufnahme zum Einfügen einer Kapsel mit Extraktionsmaterial, wobei der Behälter zum Brühen eines Getränkes auf dem in dieser Position unten angeordneten Oberteil abstellbar ist, damit heißes Wasser in die Kapsel strömt.

Zur Zubereitung von Tee offenbart die CN 107 259 928 einen Behälter mit einem Oberteil und einem Unterteil, wobei in dem Unterteil eine Heizeinrichtung zum Erhitzen von Wasser und in dem Oberteil ein Filterelement für Tee vorgesehen sind. Dadurch kann durch Umdrehen des Behälters und Abstellen des Oberteils Tee zubereitet werden, wobei der Brühvorgang durch ein erneutes Umdrehen des Behälters beendet wird. Zur Entnahme des Tees wird das Oberteil von dem Unterteil demontiert, so dass dieser Behälter nur begrenzt als Trinkgefäß geeignet ist. Das Oberteil mit dem Filterelement muss ferner mühsam gereinigt werden.

Die WO 2020/030329 A1 offenbart eine Vorrichtung und ein Verfahren zur Zubereitung eines Getränks, bei dem an einem abnehmbaren Oberteil eine Aufnahme zum Einfügen einer Kapsel vorgesehen ist. Dies erleichtert die Handhabung, da der Behälter für die Zubereitung umgedreht wird, bis die erforderliche Ziehzeit erreicht ist, um dann den Behälter erneut umdrehen zu können und das Getränk zu entnehmen. Zwar ist die Reinigung durch Entnahme der Kapsel erleichtert, der Behälter eignet sich jedoch nicht als Trinkgefäß, insbesondere für Fahrten mit Fahrzeugen, die gerade bei Heißgetränken einen Spritzschutz erfordern.

US 3,181,951 offenbart einen Behälter zum Brühen von Kaffee, bei dem ein Container für gemahlenen Kaffee über Magnete an einem Deckel fixierbar ist. Durch Drehen des Behälters kann der Container mit heißem Wasser umspülte werden, um ein Kaffeegetränk herzustellen.

Es ist daher Aufgabe der vorliegenden Erfindung, eine Vorrichtung zur Zubereitung eines Getränkes zu schaffen, bei der der Behälter in verbesserter Weise auch als Trinkgefäß genutzt werden kann und insbesondere auch zur Mitnahme auf Transportwegen geeignet ist.

Diese Aufgabe wird mit einer Vorrichtung mit den Merkmalen des Anspruches 1 gelöst.

Bei der erfindungsgemäßen Vorrichtung umfasst der Behälter ein Unterteil zur Aufnahme von Wasser und ein Oberteil, das eine Aufnahme zum Einfügen einer Kapsel mit Extraktionsmaterial aufweist, wobei benachbart zu dieser Aufnahme ein rohrförmiger Kanal zur Entnahme des Getränks ausgebildet ist, der durch ein Verschlusselement verschließbar ist. Dadurch kann der Behälter mit dem auf dem Unterteil montierten Oberteil abgedichtet gegenüber der Umgebung ausgebildet sein, so dass der Behälter zum Transport mitgeführt werden kann. Zur Entnahme des Getränkes kann dann das Verschlusselement in eine Öffnungsposition bewegt werden, um über den rohrförmigen Kanal das Getränk auszugießen oder an einer Schnaupe unmittelbar zu trinken. Dies verbessert die Handhabung des Behälters und vermindert das Verletzungsrisiko durch ein heißes Brühgetränk. Der rohrförmige Kanal ist bevorzugt vollständig innerhalb des Oberteils ausgebildet und nicht in dem Zwischenraum zwischen Unterteil und Oberteil.

Vorzugsweise erstreckt sich der rohrförmige Kanal im Wesentlichen vertikal von einer Unterseite des Oberteils zu einer Oberseite hin. Dadurch kann der Kanal einfach gereinigt werden. Der Kanal muss sich dabei nicht über die gesamte Höhe des Oberteils erstrecken, sondern besitzt bevorzugt einen Einlass im Bereich einer Trennwand an dem Oberteil bis zu einer Decke im oberen Bereich des Oberteils. Auf der Decke des Oberteils kann dann das Verschlusselement angeordnet sein.

Der rohrförmige Kanal in dem Oberteil besitzt vorzugsweise ein Volumen kleiner 10 cm³, insbesondere zwischen 1 cm³ bis 6 cm³. Dadurch ist beim Brühvorgang gewährleistet, dass nur wenig Wasser in den Kanal strömt, da dieses Wasser am Brühvorgang nicht teilnimmt. Der größte Teil des Volumens des heißen Wassers kann beim Brühvorgang, bei dem das Oberteil auf einem Untergrund abgestellt und somit unten angeordnet ist, in Fluidverbindung mit dem Extraktionsmaterial gelangen. Dadurch ist der Anteil an heißem Wasser, der aufgrund der Strömungsverhältnisse beim Brühvorgang nicht in die Kapsel gelangen kann, recht gering und beeinträchtigt nicht das Geschmackserlebnis.

In einer weiteren Ausgestaltung ist in dem Oberteil benachbart zu der Aufnahme für die Kapsel und benachbart zu dem rohrförmigen Kanal ein Entlüftungskanal ausgebildet. Dadurch kann beim Trinken ein Druckausgleich stattfinden, wenn das Volumen des Getränks reduziert wird. Der Entlüftungskanal ist vorzugswese über das Verschlusselement verschließbar, das auch den rohrförmigen Kanal verschließt, so dass mit einer Bewegung des Verschlusselementes sowohl der rohrförmige Kanal als auch der Entlüftungskanal geöffnet und verschlossen werden können.

Das Verschlusselement ist für eine einfache Handhabung als verschwenkbarer Deckel ausgebildet. Dabei kann das Verschlusselement sowohl in einer Offenstellung als auch in einer Schließstellung verrastbar sein, beispielsweise in unterschiedlichen Winkelpositionen. Der Deckel kann dabei an der Oberseite des Oberteils angeordnet sein.

Vorzugsweise ist an dem Oberteil ein Halter vorgesehen, mittels dem die Kapsel in der Aufnahme fixierbar ist, die bevorzugt tassenförmig ausgebildet ist. Der Halter kann dabei verschwenkbar an dem Oberteil gelagert sein und in einer Öffnungsposition eine Entnahme und ein Einfügen einer Kapsel ermöglichen, während in einer Schließposition die Kapsel in der Aufnahme fixiert wird. Hierfür kann an dem Oberteil und dem Halter eine Fixiereinrichtung vorgesehen sein, die die Kapsel in der eingefügten Position hält, wobei die Fixiereinrichtung bevorzugt mindestens einen Magneten umfasst. Dadurch kann ein effektives Öffnen und Schließen erfolgen, wobei die Haltekräfte durch den mindestens einen Magneten erzeugt werden. Vorzugsweise sind sowohl an dem Oberteil als auch an dem Halter mindestens ein Magnet vorgesehen. Alternativ können auch mechanische Fixierelemente, beispielsweise Raststege, vorgesehen sein, um den Halter in einer Verschlussposition zu fixieren.

Um ein Eindringen von Wasser in die Aufnahme an dem Oberteil beim Brühvorgang zu vermeiden, kann um die Aufnahme am Oberteil ein Dichtring vorgesehen sein, an dem ein Rand der Kapsel auflegbar ist. Die Kapsel kann an dem Rand durch den Halter gegen den Dichtring gedrückt werden, was für eine zuverlässige Abdichtung sorgt. Dadurch kann die Aufnahme sauber bleiben, und es können insbesondere Sensoreinrichtungen zur Identifizierung der Kapsel vorgesehen werden, beispielsweise optische Erkennungsmittel, die im Bodenbereich der Kapsel vorgesehen sind.

Vorzugsweise ist in dem Oberteil eine Platine mit einer Steuerung vorgesehen, die beispielsweise mit einem Sensor verbunden ist, um den Kapseltyp zu identifizieren. Durch Erfassung eines bestimmten Kapseltyps können die Wassertemperatur und/oder die Ziehzeit gesteuert werden. Die Ziehzeit kann beispielsweise über akustische oder optische Erkennungsmittel angezeigt werden, damit der Benutzer weiß, wann der Behälter wieder gedreht werden muss. Die optischen und akustischen Erkennungsmittel könne optional in dem Oberteil verbaut sein, so dass der Behälter während des Brühvorgangs auch beabstandet von einer Basisstation positioniert werden kann.

Die Vorrichtung umfasst bevorzugt auch eine Basisstation, auf der der Behälter abstellbar und abnehmbar ist, wobei die Basisstation Steckkontakte aufweist, um die Heizeinrichtung mit Strom zu versorgen.

Die Erfindung wird nachfolgend anhand eines Ausführungsbeispiels mit Bezug auf die beigefügten Zeichnungen näher erläutert. Es zeigen:

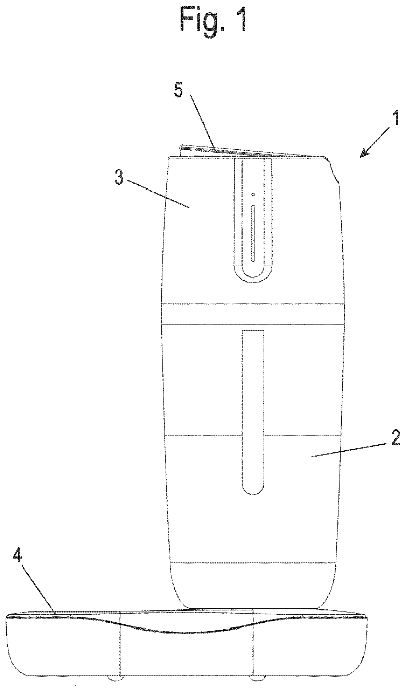

- Figur 1: eine perspektivische Ansicht einer erfindungsgemäßen Vorrichtung;
- Figur 2: eine Schnittansicht durch den Behälter der Vorrichtung der Figur 1;
- Figur 3: eine Ansicht des Behälters mit demontiertem Oberteil;
- Figur 4: eine perspektivische Ansicht des Oberteils im Bereich der Aufnahme zum Einfügen der Kapsel;
- Figur 5: eine Detailansicht des Halters für eine Kapsel;
- Figur 6: eine Schnittansicht durch die Aufnahme mit dem Halter mit eingefüg-ter Kapsel;
- Figur 7: eine Schnittansicht durch das Oberteil in einer Schließposition, und
- Figur 8: eine Schnittansicht durch das Oberteil in einer Öffnungsposition.

Eine Vorrichtung zur Zubereitung eines Getränks umfasst einen Behälter 1, der auf einer Basisstation 4 abgestellt ist. Der Behälter 1 umfasst ein Unterteil 2 zur Aufnahme von Wasser und ein Oberteil 3, das an dem Unterteil 2 lösbar fixiert ist. An dem Oberteil 3 ist ein Verschlusselement 5 in Form eines Deckels vorgesehen.

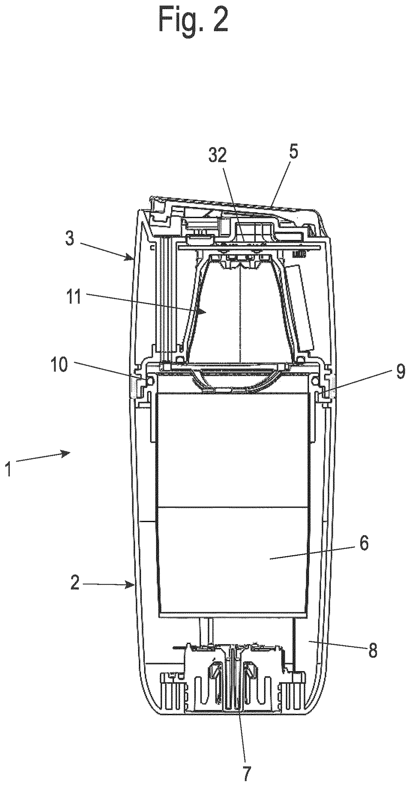

Wie in Figur 2 erkennbar ist, umfasst das Unterteil 2 einen inneren Becher 6 zur Aufnahme von Wasser, das über eine Heizeinrichtung 7 erhitzt werden kann. Der innere Becher 6 ist von einer äußeren Wand 8 des Unterteils 2 umgeben, so dass das Unterteil 2 außen an der Wand 8 gegriffen werden kann, ohne dass diese durch das heiße Wasser in dem Becher 6 zu heiß zum Anfassen wird. Die Heizeinrichtung 7 kann über Heizschleifen oder andere Heizelemente den Boden des Bechers 6 erwärmen und wird über die Basisstation 4 mit Strom versorgt, insbesondere über Steckkontakte, so dass der Behälter 1 von der Basisstation 4 abnehmbar ist.

Das Oberteil 3 umfasst eine Aufnahme 11 für eine Kapsel mit Extraktionsmaterial, insbesondere Tee. Die Kapsel kann dabei so ausgebildet sein, wie dies in dem Dokument DE 10 2014 109 768 B4 offenbart ist. Der Innenraum der Kapsel ist in der eingefügten Position in der Aufnahme 11 über ein Sieb oder ein anderes Filtermaterial zugänglich, damit bei einem Umdrehen des Behälters 1 heißes Wasser in die Kapsel für einen Brühvorgang strömen kann. An dem Oberteil 3 ist dabei eine Platine 32 mit einer Steuerung und einer Erkennungseinrichtung vorgesehen, um eine Codierung der Kapsel auszulesen, so dass die Ziehzeit und/oder die Wassertemperatur gesteuert werden kann. Hierfür kann am Boden der Kapsel, der benachbart zu der Platine 32 angeordnet ist, eine Codierung für eine optische Erkennungseinrichtung vorgesehen sein.

Benachbart zu der Aufnahme 11 ist ein rohrförmiger Kanal 14 zur Entnahme des Getränks ausgebildet. Der rohrförmige Kanal 14 erstreckt sich dabei von einer Unterseite des Oberteils 3 hin zu dem Verschlusselement 5, das in der geschlossenen Position den Kanal 14 verschließt und in der geöffneten Position ein Ausgießen des zubereiteten Getränks ermöglicht.

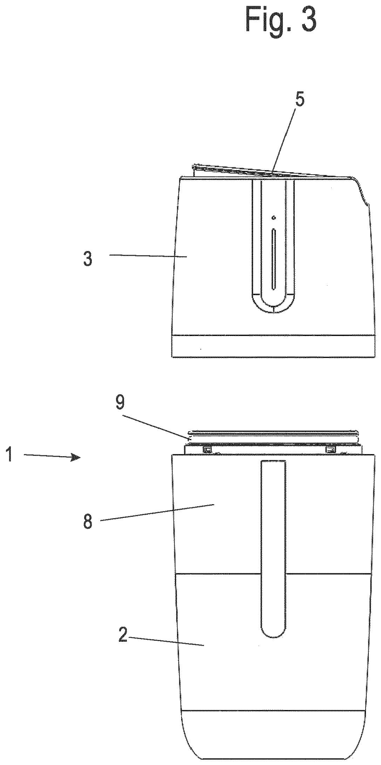

In Figur 3 ist das Oberteil 3 in einer abgenommenen Position dargestellt. Es ist erkennbar, dass das Unterteil 2 zwischen der äußeren Wand 8 und dem inneren Becher 6 eine Trennwand 9 mit einem Stutzen aufweist, an dem ein Dichtring 10 einlegbar ist, um das Oberteil 3 abgedichtet an dem Unterteil 2 montieren zu können. In der abgenommenen Position kann kaltes Wasser in das Unterteil 2 eingefüllt werden.

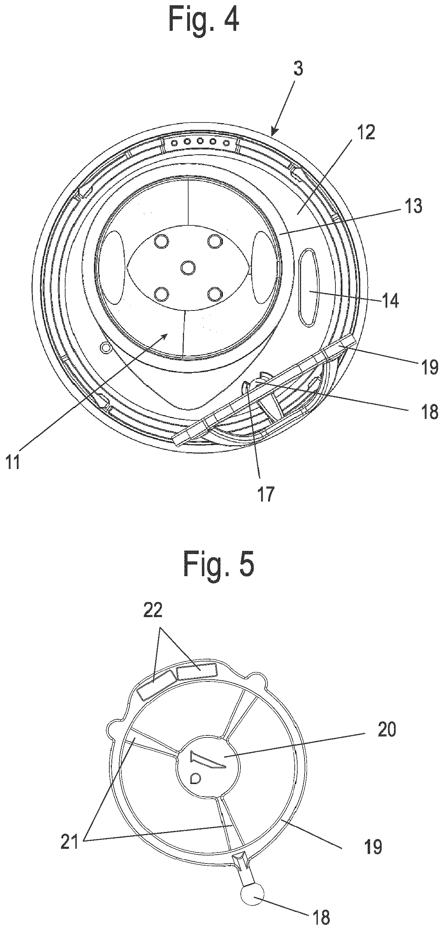

In Figur 4 ist das Oberteil 3 von unten dargestellt, und es ist erkennbar, dass die tassenförmige Aufnahme 11 von einer Zwischenwand 12 umgeben ist, wobei an der Zwischenwand 12 um die Aufnahme 11 eine ringförmige Dichtung 13 vorgesehen ist. An der Zwischenwand 12 ist ein Einlass zu dem rohrförmigen Kanal 14 vorgesehen, der einen Querschnitt von beispielsweise kleiner 3 cm² besitzt, damit das während eines Brühvorgangs in den rohrförmigen Kanal 14 einströmende Wasser nur ein geringes Volumen besitzt, da dieses nicht oder nur geringfügig an dem Brühvorgang teilnimmt. Beabstandet von der Aufnahme 11 und dem Kanal 14 ist ein Entlüftungskanal 15 vorgesehen, der sich von der Unterseite des Oberteils 3 zu der Oberseite hin erstreckt und ebenfalls durch das Verschlusselement 5 verschließbar ist. Durch den Entlüftungskanal 15 kann Luft in den Behälter 1 nachströmen, wenn Flüssigkeit entnommen wird.

An der Zwischenwand 12 ist ferner ein Lager 17 für einen Halter 19 ausgebildet, der verschwenkbar an dem Lager 17 gehalten ist. Hierfür ist an dem Halter 19 ein Kugelelement 18 vorgesehen, das drehbar an dem Lager 17 angeordnet ist. Es ist auch möglich, ein anderes Lager mit einem Stift oder Bolzen an dem Oberteil 3 vorzusehen, um den Halter 19 verschwenkbar zu lagern.

Der Halter 19 ist in Figur 5 im Detail gezeigt. Der Halter 19 umfasst einen Ring, von dem an einer Seite ein Steg mit dem Kugelelement 18 hervorsteht. An der gegenüberliegenden Seite sind ein oder mehrere Magnete 22 vorgesehen, die Teil einer Fixiereinrichtung sind, um den Halter 19 in einer Schließposition an dem Oberteil 3 fixieren. Die Magnete 22 können dabei in das Material des Halters 19, insbesondere Kunststoff, eingegossen sein. Von dem Ring des Halters 19 erstrecken sich mehrere Speichen 21 in gebogener Kontur zu einem Verbindungselement 20, so dass der Halter 19 verstärkt ist und für einen gewissen Anpressdruck sorgen kann.

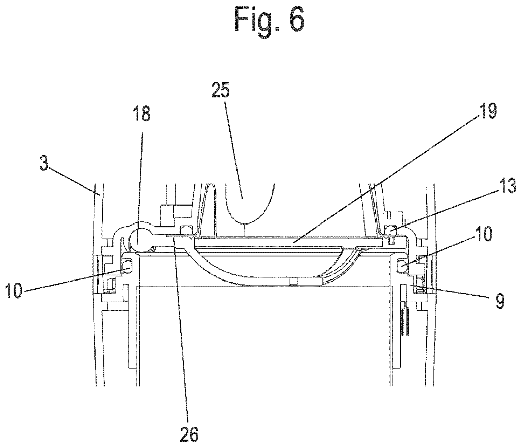

In Figur 6 ist der Halter 19 in einer montierten Position gezeigt, wobei eine Kapsel 25 in die Aufnahme 11 eingefügt ist. Ein Rand 26 der Kapsel 25 steht radial nach außen hervor und ist zwischen dem Ring des Halters 19 und der ringförmigen Dichtung 13 eingeklemmt, so dass der Raum zwischen der Außenseite der Kapsel und der Innenseite der Aufnahme 11 abgedichtet ist. An dem Oberteil 3 können ebenfalls einer oder mehrere Magnete vorgesehen sein, die mit den Magneten 22 an dem Halter 19 zusammenwirken, um den Halter 19 in der Schließposition zu halten. Über den Umfang verteilt können mehrere Magnete vorgesehen sein, um die Kapsel mit dem Rand 26 mit einem gewissen Anpressdruck gegen die Dichtung 13 zu drücken.

In Figur 6 ist auch erkennbar, dass die Trennwand 9 mit dem Stutzen den Dichtring 10 hält, an der ein äußerer Stutzen 23 des Oberteils 3 anliegt, so dass Oberteil 3 und Unterteil 2 abgedichtet miteinander verbunden sind. Ferner können mechanische Verriegelungsmittel oder Rastmittel vorgesehen sein, um das Oberteil 3 in der montierten Position an dem Unterteil 2 zu halten, beispielsweise über einen Bajonettverschluss.

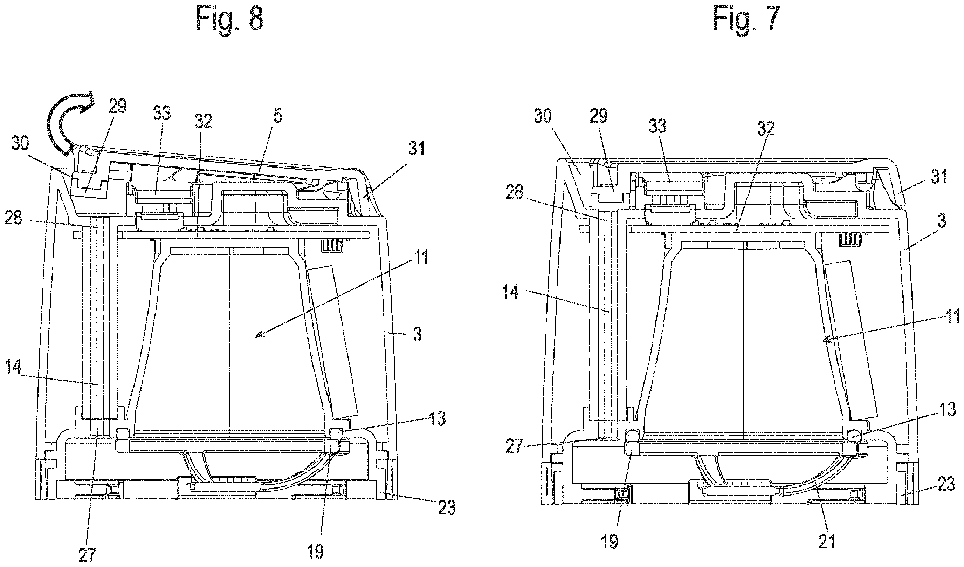

In Figur 7 ist das Oberteil 3 in einer Schließposition dargestellt. Der rohrförmige Kanal 14 ist an einem Einlass 27 offen ausgebildet, aber an einem Auslass 28 im oberen Bereich durch einen Abschnitt 29 des Verschlusselementes 5 abgedichtet. Benachbart zu dem Boden der Aufnahme 11 und der Kapsel ist eine Platine 32 angeordnet, die eine Steuerung umfasst, um das Ende einer Brühvorgangs über optische oder akustische Mittel zu signalisieren. Hierfür ist ein Lautsprecher 33 am Oberteil 3 montiert, der über akustische Signale das Ende der Brühzeit angibt. Alternativ oder zusätzlich können auch optische Mittel am Oberteil 3 oder Unterteil 2 verbaut sein. Vorzugsweise ist ferner ein Positionssensor vorgesehen, mittels dem die Ausrichtung des Behälters 1 erfassbar ist, so dass der Beginn des Brühvorganges durch Umdrehen des Behälters 1 automatisch erfasst wird.

In Figur 8 ist das Oberteil mit geöffnetem Verschlusselement 5 dargestellt. Das Verschlusselement 5 wurde gegenüber der Schließposition verschwenkt, beispielsweise um einen Winkel zwischen 5° bis 20°, so dass der Abschnitt 29 von dem Auslass 28 des rohrförmigen Kanals 14 abgehoben ist. Dadurch kann nun das Brühgetränk über den rohrförmigen Kanal 14 zu einer Schnaupe 30 geleitet werden und wahlweise ausgegossen oder unmittelbar getrunken werden. Das Verschlusselement ist vorzugsweise in der Schließposition und in der Öffnungsposition verrastbar, um ein versehentliches Öffnen oder Schließen zu vermeiden. An dem Verschlusselement 5 ist auf der zu dem Abschnitt 29 gegenüberliegenden Seite ein Betätigungsabschnitt 31 vorgesehen, der zum Öffnen gedrückt wird, um das Verschlusselement 5 in die Öffnungsposition zu verschwenken. Zum Schließen kann das Verschlusselement 5 von oben wieder auf das Oberteil 3 gedrückt werden.

Zur Zubereitung eines Getränks wird das Oberteil 3 von dem Unterteil 2 abgenommen und Wasser in den Becher 6 eingefüllt. Dann wird das Oberteil 3 wieder dicht auf das Unterteil 2 montiert und die Zubereitung durch ein Bedienelement, beispielsweise einen Druckknopf am Unterteil 2, eingeleitet. Dadurch wird über die Heizeinrichtung 7 das Wasser in dem Becher 6 auf die gewünschte Temperatur erwärmt. Durch das Bedienelement wird zusätzlich bei der Identifikation die Kapsel 25 ausgelesen, damit abhängig von der Teesorte die Ziehzeit und Wassertemperatur gesteuert werden können.

Nach dem Erhitzen des Wassers wird der Behälter 1 umgedreht, so dass das Oberteil 3 auf einem Boden oder der Basisstation 4 abgestellt ist. Dadurch kann heißes Wasser in die Kapsel 25 strömen, die über den Halter 19 der Aufnahme 11 fixiert ist. Am Ende der Brühzeit kann ein optisches und/oder akustisches Signal ausgegeben werden, so dass der Benutzer den Behälter 1 wieder umdreht, so dass das Unterteil 2 unten angeordnet ist. Der Behälter 1 kann nun als Getränk auf Transportwegen mitgeführt werden, da der Behälter 1 nach außen abgedichtet ist und das heiße Getränk in dem Becher 6 über den doppelwandigen Aufbau des Unterteils 2 wärmeisoliert angeordnet ist. Zum Trinken kann das Verschlusselement 5 verschwenkt werden, so dass das Getränk über den rohrförmigen Kanal 14 getrunken werden kann.

### Bezugszeichenliste

- 1: Behälter
- 2: Unterteil
- 3: Oberteil
- 4: Basisstation
- 5: Verschlusselement
- 6: Becher
- 7: Heizeinrichtung
- 8: äußere Wand
- 9: Trennwand
- 10: Dichtring
- 11: Aufnahme
- 12: Zwischenwand
- 13: Dichtung
- 14: Kanal
- 15: Entlüftungskanal
- 17: Lager
- 18: Kugelelement
- 19: Halter
- 20: Verbindungselement
- 21: Speiche
- 22: Magnet
- 23: Stutzen
- 24: Magnet
- 25: Kapsel
- 26: Rand
- 27: Einlass
- 28: Auslass
- 29: Abschnitt
- 30: Schnaupe
- 31: Betätigungsabschnitt
- 32: Platine
- 33: Lautsprecher

## Patentansprüche

1. Vorrichtung zur Zubereitung eines Getränkes, mit einem Behälter (1) mit einem Unterteil (2) zur Aufnahme von Wasser, einer Heizeinrichtung (7) zum Erhitzen des Wassers in dem Unterteil (2), und einem abnehmbaren Oberteil (3) mit einer Aufnahme (11) zum Einfügen einer Kapsel (25) mit Extraktionsmaterial, wobei der Behälter (1) zum Brühen eines Getränkes auf dem in dieser Position unten angeordneten Oberteil (3) abstellbar ist, damit heißes Wasser in die Kapsel (25) strömt, **dadurch gekennzeichnet, dass** in dem Oberteil (3) benachbart zu der Aufnahme (11) ein rohrförmiger Kanal (14) zur Entnahme des Getränkes ausgebildet ist, der durch ein Verschlusselement (5) verschließbar ist.

2. Vorrichtung nach Anspruch 1, **dadurch gekennzeichnet, dass** der rohrförmige Kanal (14) sich im Wesentlichen vertikal von einer Unterseite des Oberteils (2) zu einer Oberseite hin erstreckt.

3. Vorrichtung nach Anspruch 1 oder 2, **dadurch gekennzeichnet, dass** der rohrförmige Kanal (14) ein Volumen < 10 cm³ aufweist, insbesondere zwischen 1 cm³ bis 6 cm³.

4. Vorrichtung nach einem der vorhergehenden Ansprüche, **dadurch gekennzeichnet, dass** in dem Oberteil (3) benachbart zu der Aufnahme (11) und beabstandet zu dem rohrförmigen Kanal (14) ein Entlüftungskanal (15) ausgebildet ist.

5. Vorrichtung nach Anspruch 4, **dadurch gekennzeichnet, dass** mit dem Verschlusselement (5) sowohl der rohrförmige Kanal (14) als auch der Entlüftungskanal (15) verschließbar ist.

6. Vorrichtung nach einem der vorhergehenden Ansprüche, **dadurch gekennzeichnet, dass** das Verschlusselement (5) als verschwenkbarer Deckel ausgebildet ist.

7. Vorrichtung nach einem der vorhergehenden Ansprüche, **dadurch gekennzeichnet, dass** an dem Oberteil (3) ein Halter (19) vorgesehen ist, mittels dem die Kapsel (25) in der Aufnahme (11) fixierbar ist.

8. Vorrichtung nach Anspruch 7, **dadurch gekennzeichnet, dass** der Halter (19) verschwenkbar an dem Oberteil (3) gelagert ist.

9. Vorrichtung nach Anspruch 7 oder 8, **dadurch gekennzeichnet, dass** an dem Oberteil (3) und dem Halter (19) eine Fixiereinrichtung vorgesehen ist, um die Kapsel (25) in der in der Aufnahme (11) eingefügten Position zu halten, die mindestens einen Magneten (22, 24) umfasst.

10. Vorrichtung nach einem der vorhergehenden Ansprüche, **dadurch gekennzeichnet, dass** um die Aufnahme (11) an dem Oberteil (3) ein Dichtring (13) vorgesehen ist, an dem ein Rand (26) der Kapsel (25) anlegbar ist.

11. Vorrichtung nach einem der vorhergehenden Ansprüche, **dadurch gekennzeichnet, dass** die Aufnahme (11) an dem Oberteil (3) tassenförmig ausgebildet ist.

12. Vorrichtung nach einem der vorhergehenden Ansprüche, **dadurch gekennzeichnet, dass** das Verschlusselement (5) in einer Offenstellung und in einer Schließstellung verrastbar ist.

13. Vorrichtung nach einem der vorhergehenden Ansprüche, **dadurch gekennzeichnet, dass** in dem Oberteil (3) eine Platine (32) mit einer Steuerung angeordnet ist.

14. Vorrichtung nach einem der vorhergehenden Ansprüche, **dadurch gekennzeichnet, dass** die Vorrichtung eine Basisstation (4) umfasst, auf der der Behälter (1) abstellbar und abnehmbar ist, wobei die Basisstation (4) Steckkontakte aufweist, um die Heizeinrichtung (7) mit Strom zu versorgen.
